# DEMANDE DE BREVET EUROPEEN

(11) **EP 4 163 517 A1**
(43) Date de publication de la demande: **12.04.2023**
(21) Numéro de dépôt: 22198631.8
(22) Date de dépôt: 29.09.2022
(51) Int. Cl.: F16H 48/34

(54) **SYSTÈME DE TRANSMISSION COMPORTANT UN DISPOSITIF DE RÉDUCTION ET UN DISPOSITIF D'ENTRAÎNEMENT DIFFÉRENTIEL**

(30) Priorité: 08.10.2021 FR 2110682
(71) Demandeur: Valeo Embrayages, 95892 Cergy Pontoise (FR)
(72) Inventeur: VERHOOG, Roël, 80009 AMIENS (FR); HENNEBELLE, Michael, 80000 Amiens (FR)
(74) Mandataire: Valeo Powertrain Systems

(57) **Abrégé**

[L'invention concerne un système de transmission pour un véhicule automobile comprenant:
- un dispositif de réduction (1) comprenant au moins un arbre de sortie (7) comportant une première roue dentée (12) et une deuxième roue dentée (13) ;
- un dispositif d'entraînement différentiel (2) qui est configuré pour distribuer le couple du dispositif de réduction (1) vers deux arbres de roue (3, 4), le dispositif d'entraînement différentiel (2) comprenant un dispositif d'accouplement (20) qui en position accouplée transmet un couple entre un premier élément (45) et un deuxième élément (46) du dispositif d'entraînement différentiel (2), le dispositif d'accouplement (20) comportant en outre un actionneur (27),
et dans lequel un plan radial, orthogonal aux axes X et W, passe par la première roue dentée (12) et par le dispositif d'accouplement (20).

## Description

### Domaine technique

L'invention se rapporte au domaine des véhicules et concerne un système de transmission qui comporte, d'une part, un dispositif de réduction destiné à recevoir le couple d'un moteur et à le multiplier et, d'autre part, un dispositif d'entraînement différentiel qui permet de distribuer le couple provenant du dispositif de réduction vers deux arbres de roue d'un essieu de véhicule en les autorisant à tourner à des vitesses différentes.

L'invention vise plus particulièrement un système de transmission du type précité dans lequel le dispositif d'entraînement différentiel comporte un dispositif d'accouplement qui est apte à sélectivement accoupler un premier élément lié cinématiquement au dispositif de réduction à un deuxième élément qui est accouplé à au moins un des deux arbres de roue précités.

### Arrière-pian technologique

Dans l'état de la technique, il est connu des systèmes de transmission pour des véhicules électriques ou hybrides comportant un dispositif de réduction recevant le couple fourni par un moteur électrique et un dispositif d'entraînement différentiel qui permet de distribuer le couple du dispositif de réduction vers deux arbres de roue d'un essieu du véhicule en les autorisant à tourner à des vitesses différentes.

Le dispositif de réduction comporte au moins un arbre d'entrée et un arbre de sortie. L'arbre d'entrée est, d'une part, accouplé en rotation au rotor du moteur et, d'autre part, accouplé en rotation à l'arbre de sortie par l'intermédiaire d'un ou plusieurs jeux d'engrenages. L'arbre de sortie comporte une première roue dentée et une deuxième roue dentée qui est plus petite que la première. La première roue dentée reçoit le couple provenant du moteur tandis que la seconde roue dentée le transmet vers le dispositif d'entraînement différentiel. Le dispositif d'entraînement différentiel comporte un boitier de différentiel mobile en rotation qui est équipé d'une roue dentée en prise avec la deuxième roue dentée de l'arbre de sortie. A l'intérieur du boîtier de différentiel, sont logés une couronne porteuse guidée en rotation dans ledit boîtier de différentiel, deux engrenages satellites qui sont montés en rotation sur la couronne porteuse autour d'un axe perpendiculaire à l'axe de rotation du boîtier de différentiel, et deux engrenages planétaires qui engrènent chacun avec les deux engrenages satellites et qui sont chacun solidaires en rotation d'un arbre de roue. Par ailleurs, le système de transmission comporte un dispositif d'accouplement qui présente une position accouplée permettant d'accoupler le boîtier de différentiel et la couronne porteuse afin de permettre une transmission de couple entre le moteur et les roues et une position désaccouplée permettant d'interrompre la transmission de couple entre le moteur et les arbres de roue. La deuxième roue dentée et le dispositif d'accouplement sont disposés axialement de part et d'autre du boîtier du différentiel.

Les systèmes de transmission du type précité ne sont pas satisfaisants. En particulier, du fait de la disposition précitée de la deuxième roue dentée et du dispositif d'accouplement de part et d'autre du boîtier différentiel, l'encombrement axial du dispositif de transmission est important. De plus, un tel encombrement axial entraîne un surpoids du carter dans lequel le système de transmission est logé, ce qui impacte négativement la consommation énergétique des véhicules automobiles équipés d'un tel système de transmission.

### Résumé

Une idée à la base de l'invention consiste à proposer un système de transmission du type précité présentant un encombrement limité.

Pour ce faire, selon un premier aspect, l'invention vise un système de transmission pour un véhicule automobile comprenant :
- un dispositif de réduction comprenant au moins un arbre de sortie qui est mobile en rotation autour d'un axe W, l'arbre de sortie comportant une première roue dentée et une deuxième roue dentée disposées côte à côte le long de l'axe W, la première roue dentée étant destinée à être entraînée en rotation par un moteur ;
- un dispositif d'entraînement différentiel qui est configuré pour distribuer le couple du dispositif de réduction vers deux arbres de roue d'un essieu d'un véhicule, le dispositif d'entraînement différentiel comprenant un premier élément et un deuxième élément, chacun des premier et deuxième éléments étant mobile en rotation autour d'un axe X, parallèle à l'axe W, le premier élément étant équipé d'une roue dentée d'entraînement qui est en prise avec la deuxième roue dentée de l'arbre de sortie et le deuxième élément étant destiné à entrainer au moins l'un des arbres de roue ; le dispositif d'entraînement différentiel comprenant un dispositif d'accouplement qui comporte une première partie d'accouplement qui est solidaire en rotation du premier élément et une deuxième partie d'accouplement qui est solidaire en rotation du deuxième élément, la première partie d'accouplement étant mobile axialement par rapport au premier élément entre une position accouplée dans laquelle la première partie d'accouplement est accouplée avec la deuxième partie d'accouplement pour transmettre un couple entre le premier élément et le deuxième élément et une position désaccouplée dans laquelle la première partie d'accouplement et la deuxième partie d'accouplement sont désaccouplées l'une de l'autre, le dispositif d'accouplement comportant en outre un actionneur coopérant avec la première partie d'accouplement afin de la déplacer entre la position accouplée et la position désaccouplée,
- un plan radial, orthogonal aux axes X et W, passant par la première roue dentée et par le dispositif d'accouplement, en particulier par l'actionneur, et notamment par son électro-aimant.

Ainsi, compte-tenu de la position relative de la première roue dentée de l'arbre de sortie et du dispositif d'accouplement, l'encombrement axial du système de transmission est limité. Une telle diminution de l'encombrement permet également de diminuer en conséquence la masse du ou des carters de transmission dans lequel est logé ledit système de transmission, ce qui diminue en conséquence la consommation énergétique du véhicule équipé d'un tel système de transmission.

Selon des modes de réalisation, un tel système de transmission peut comporter une ou plusieurs des caractéristiques suivantes.

Selon un mode de réalisation, l'actionneur comporte :
- une carcasse, disposée autour de l'axe X, la carcasse étant fixée axialement et circonférentiellement sur un carter du système de transmission ; et
- un piston guidé en translation axiale à l'intérieur de la carcasse entre une position rétractée et une position déployée, ledit piston étant agencé pour déplacer la première partie d'accouplement de la position désaccouplée vers la position accouplée lors du mouvement du piston de la position rétractée vers la position déployée.

Selon un mode de réalisation, une projection radiale de la première roue dentée sur l'axe X et une projection radiale du dispositif d'accouplement sur l'axe X se recouvrent au moins partiellement.

Selon un mode de réalisation, un plan radial passe par la première roue dentée et par l'actionneur du dispositif d'accouplement.

Selon un mode de réalisation, un plan radial passe par la première roue dentée et par la carcasse de l'actionneur.

Selon un mode de réalisation, la première roue dentée est positionnée axialement entre la deuxième roue dentée et un plan radial, orthogonal à l'axe X, et passant par une paroi de fond de la carcasse. Ceci permet de limiter encore davantage l'encombrement axial du système de transmission puisque la première roue dentée de l'arbre de sortie est contenue dans l'encombrement axial du dispositif d'accouplement.

Selon un mode de réalisation, la carcasse comporte une jupe interne et une jupe externe reliées par la paroi de fond.

Selon un mode de réalisation, la paroi de fond définit une extrémité de l'actionneur qui est opposée à la première partie d'accouplement.

Selon un mode de réalisation, le piston est, de préférence, fixe en rotation autour de l'axe X et est fixé axialement à la première partie d'accouplement par une liaison pivot autorisant une rotation relative autour de l'axe X de la première partie d'accouplement par rapport au piston.

Selon un mode de réalisation, le piston est bloqué en rotation autour de l'axe X par rapport à la carcasse de l'actionneur.

Selon un mode de réalisation, le dispositif d'accouplement comporte une cible qui est fixée au piston et qui est destinée à être positionnée en regard d'un capteur apte à délivrer un signal représentatif de la distance entre la cible et le capteur.. Ainsi, grâce à la fixation de la cible au piston, la cible n'est pas rotative par rapport au capteur.

Selon un mode de réalisation, considérés en projection dans un plan orthogonal audit axe X, la cible est inscrite à l'intérieur d'un premier secteur angulaire α de centre X et la première roue dentée est inscrite à l'intérieur d'un deuxième secteur angulaire β de centre X, la premier secteur angulaire α et le deuxième secteur angulaire β étant distincts l'un de l'autre. Ceci permet de limiter l'encombrement radial du dispositif d'accouplement sur la zone circonférentielle du dispositif d'accouplement qui est en regard de la première roue dentée.

Selon un mode de réalisation, le premier secteur angulaire α et le deuxième secteur angulaire β sont circonférentiellement opposés de part et d'autre de l'axe X.

Selon un mode de réalisation, il existe un plan dans lequel l'axe X est inclus et qui passe par la cible et la première roue dentée.

Selon un mode de réalisation, la cible comporte une portion de détection positionnée en regard du capteur et une patte de fixation qui traverse un évidement de la carcasse et qui est fixée au piston. Ainsi, la patte de fixation forme un organe anti-rotation empêchant ou limitant la rotation relative, autour de l'axe X, du piston par rapport à la carcasse.

Selon un mode de réalisation, la carcasse présente un dégagement ménagé dans une zone radialement en regard de la première roue dentée.. Un tel dégagement libère un espace pour le passage de la première roue dentée de l'arbre de sortie.

Selon un mode de réalisation, la carcasse présente une jupe externe et le dégagement est ménagé dans ladite jupe externe.

Selon un mode de réalisation, le piston comporte un corps en matériau ferromagnétique et l'actionneur comporte un électro-aimant qui est logé dans la carcasse et qui est apte à déplacer le piston entre la position rétractée et la position déployée.

Selon un mode de réalisation, l'actionneur comporte une bague de liaison, de préférence, réalisée dans un matériau amagnétique par laquelle l'effort d'actionnement est transmis du corps du piston à la première partie d'accouplement.

Selon un mode de réalisation, la bague de liaison comprend une gorge qui est ménagée radialement en vis-à-vis d'une gorge ménagée dans la première partie d'accouplement, un anneau de retenue étant disposé à l'intérieur des deux gorges précitées afin d'assurer un blocage en translation axiale de la première partie d'accouplement par rapport à la bague de liaison.

Selon un mode de réalisation, le piston et l'électro-aimant sont disposés respectivement radialement l'un à l'intérieur de l'autre ou axialement l'un à côté de l'autre,

Selon un mode de réalisation, le premier élément comporte un boîtier de différentiel à l'intérieur duquel est logé la deuxième partie d'accouplement, la première partie d'accouplement comportant une portion intérieure qui est logée à l'intérieur du boîtier de différentiel, une portion extérieure qui est positionnée à l'extérieur du boîtier de différentiel et une pluralités de portions de liaison qui relient axialement la portion intérieure et la portion extérieure de la première partie d'accouplement, chacune de portions de liaison passant au travers d'une ouverture traversante correspondante ménagée dans le boitier de différentiel.

Selon un mode de réalisation, le deuxième élément comporte une couronne porteuse qui est guidée en rotation autour de l'axe X à l'intérieur du boîtier de différentiel, deux engrenages satellites qui sont montés en rotation sur la couronne porteuse autour d'un axe V perpendiculaire à l'axe X et deux engrenages planétaires qui sont mobiles en rotation autour de l'axe X, sont chacun en prises avec les deux engrenages satellites et sont chacun destinés à être solidaires en rotation d'un arbre de roue.

Selon un mode de réalisation, les deux engrenages satellites comportent chacun une denture conique qui engrène avec une denture conique complémentaire des deux engrenages planétaires.

Selon un mode de réalisation, la deuxième partie d'accouplement du dispositif d'accouplement est solidaire en rotation de la couronne porteuse par rapport à l'axe X. Ainsi, lorsque le dispositif d'accouplement est en position accouplée, le système de transmission distribue le couple provenant du moteur vers les deux arbres de roue. A l'inverse, la transmission du couple est interrompue entre le boitier et la couronne porteuse dans la position désaccouplée du dispositif d'accouplement.

Selon un mode de réalisation, la deuxième partie d'accouplement du dispositif d'accouplement est formée d'un seul tenant avec la couronne porteuse.

Selon un autre mode de réalisation, la deuxième partie d'accouplement est solidaire en rotation de l'un des engrenages planétaires. Dans un tel mode de réalisation, lorsque la première partie d'accouplement est en position accouplée, le couple est transmis entre le premier élément et le deuxième élément via les engrenages mais la fonction différentielle est bloquée par le dispositif d'accouplement, ce qui empêche les arbres de roue de tourner à des vitesses différentes.

Selon un mode de réalisation, le dispositif de réduction comporte un arbre d'entrée destiné à être accouplé en rotation au moteur et monté mobile en rotation selon un axe Y, parallèle aux axes X et W, ledit arbre d'entrée comprenant une roue dentée apte à entraîner, directement ou indirectement, en rotation la première roue dentée de l'arbre de sortie.

Selon un mode de réalisation, le dispositif de réduction comporte un arbre intermédiaire qui est monté mobile en rotation selon un axe Z, parallèles aux axes X, Y et W, l'arbre intermédiaire comportant une première roue dentée en prise avec la roue dentée de l'arbre d'entrée et une deuxième roue dentée en prise avec la première roue dentée de l'arbre de sortie.

Selon un mode de réalisation, la roue dentée de l'arbre d'entrée, la première roue dentée de l'arbre intermédiaire ainsi que la deuxième roue dentée de l'arbre de sortie et la roue dentée d'entraînement du dispositif d'entraînement différentiel sont positionnées radialement dans un même plan radial, orthogonal à l'axe X.

Selon un mode de réalisation, la première roue dentée et la deuxième roue dentée de l'arbre de sortie du dispositif de réduction se situent axialement, selon l'axe X, du même côté de l'axe V.

Selon un mode de réalisation, les deux engrenages satellites et les deux engrenages planétaires assurent une fonction différentielle et la zone d'accouplement et de désaccouplement (par exemple crabots) du dispositif d'accouplement est agencée cinématiquement en amont de la fonction différentielle.

De façon générale, selon un mode de réalisation, la zone d'accouplement et de désaccouplement du dispositif d'accouplement est agencée cinématiquement en amont de la fonction différentielle du dispositif d'entrainement différentiel.

Selon un mode de réalisation, la première roue dentée et l'actionneur du dispositif d'accouplement sont disposés axialement selon l'axe X du même côté de la deuxième roue.

Selon, un mode de réalisation, le plan radial, orthogonal aux axes X et W, passant par la première roue dentée et par le dispositif d'accouplement passe par l'actionneur, notamment sa carcasse.

Selon un mode de réalisation, la première roue dentée et la deuxième roue dentée de l'arbre de sortie du dispositif de réduction et le dispositif d'accouplement et notamment son actionneur, se situent axialement, selon l'axe X, du même côté de l'axe V.

Selon un mode de réalisation toutes les roues dentées du dispositif de réduction se situe axialement selon l'axe X du même côté de l'axe V que le dispositif d'accouplement, et notamment son actionneur.

Selon un deuxième aspect, l'invention concerne un groupe motopropulseur comprenant une machine électrique et un système de transmission précité, la machine électrique étant accouplée à un organe d'entrée du dispositif de réduction.

Selon un mode de réalisation, le système de transmission comprend un carter, aucune des roues du dispositif de réduction n'étant disposé axialement entre le carter du système de transmission et le boitier du différentiel du côté du dispositif d'entraînement différentiel opposé à l'actionneur. Autrement dit, l'espace est libéré de ce côté du dispositif d'entraînement différentiel.

L'invention porte aussi sur un actionneur électromagnétique comprenant un piston et un électro-aimant positionnés axialement côté à côte. Ainsi il est possible de réduire l'encombrement radial de l'actionneur. L'actionneur peu présenter en outre une ou plusieurs des caractéristiques mentionnées précédemment.

### Breve description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[fig.1] La figure 1 est une vue en perspective d'un système de transmission selon un premier mode de réalisation.
[fig.2] La figure 2 est une autre vue en perspective du système de transmission de la figure 1 dans laquelle la partie de carter, illustrée sur la figure 1, n'est pas représentée.
[fig.3] La figure 3 est une vue latérale du système de transmission des figures 1 et 2.
[fig. 4] La figure 4 est une vue en coupe selon le plan IV-IV de la figure 3.
[fig. 5] La figure 5 est une vue latérale d'un système de transmission selon une autre variante de réalisation.
[fig. 6] La figure 6 est une vue en coupe selon le plan VI-VI de la figure 5.
[fig. 7] La figure 7 est une illustration schématique en coupe d'un actionneur du dispositif d'accouplement selon une variante de réalisation.
[fig. 8] La figure 8 est une autre vue en coupe de la figure 5.

### Description des modes de réalisation

Dans la description et les revendications, on utilisera, les termes « externe » et « interne » ainsi que les orientations « axiale » et « radiale » pour désigner, selon les définitions données dans la description, des éléments du système de transmission. Par convention, l'axe X de rotation du boîtier de différentiel définit l'orientation « axiale ». L'orientation « radiale » est dirigée orthogonalement à l'axe X et, de l'intérieur vers l'extérieur en s'éloignant dudit axe.

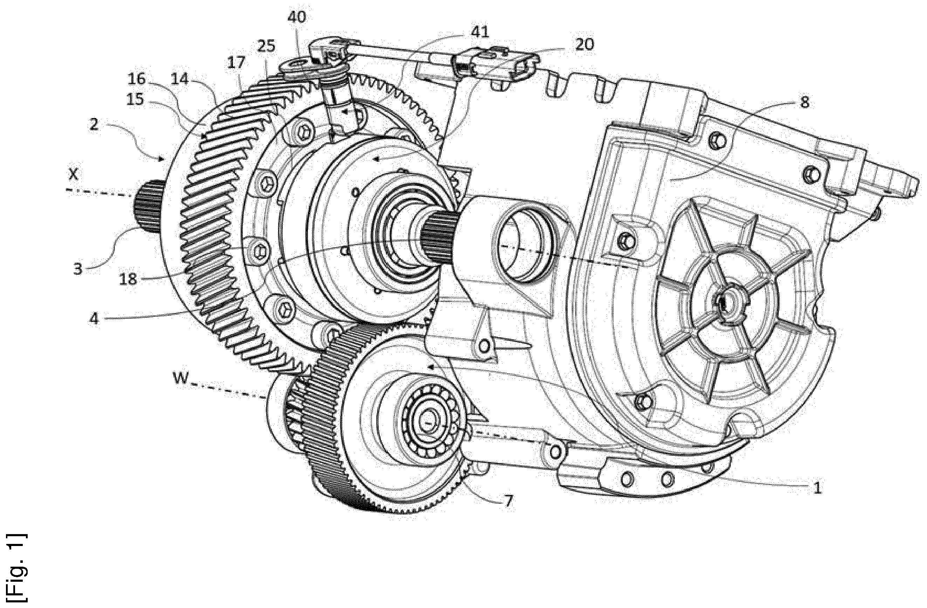

Les figures 1 à 4 illustrent un système de transmission selon un premier mode de réalisation. Le système de transmission comporte un dispositif de réduction 1 ainsi qu'un dispositif d'entraînement différentiel 2. Le dispositif de réduction 1 est destiné à être accouplé d'une part, à un moteur, tel qu'un moteur électrique, non représenté, et d'autre part, au dispositif d'entraînement différentiel 2. Le dispositif d'entraînement différentiel 2 est destiné à entrainer en rotation deux arbres de roues 3, 4 d'un essieu d'un véhicule et est configuré pour distribuer un couple entre le dispositif de réduction 1 et les deux arbres de roue 3, 4, en les autorisant à tourner à des vitesses différentes.

Selon un exemple de réalisation, un tel système de transmission est destiné à un véhicule hybride. Ainsi, le système de transmission est, par exemple, apte à transmettre un couple d'un moteur électrique vers un essieu arrière ou avant du véhicule tandis qu'un autre système de transmission accouplé à un autre moteur, tel qu'un moteur thermique, permet de générer un couple et de le transmettre entre cet autre moteur et les deux arbres de roue de l'autre essieu du véhicule.

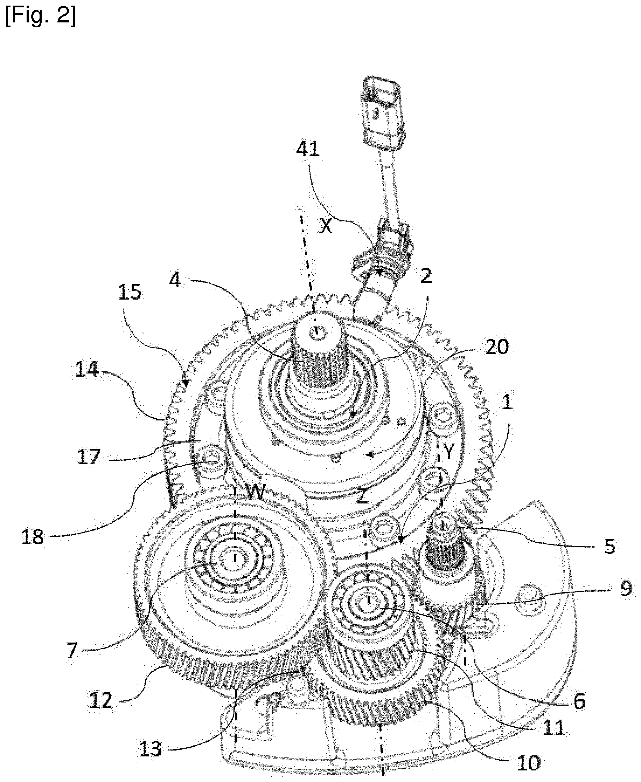

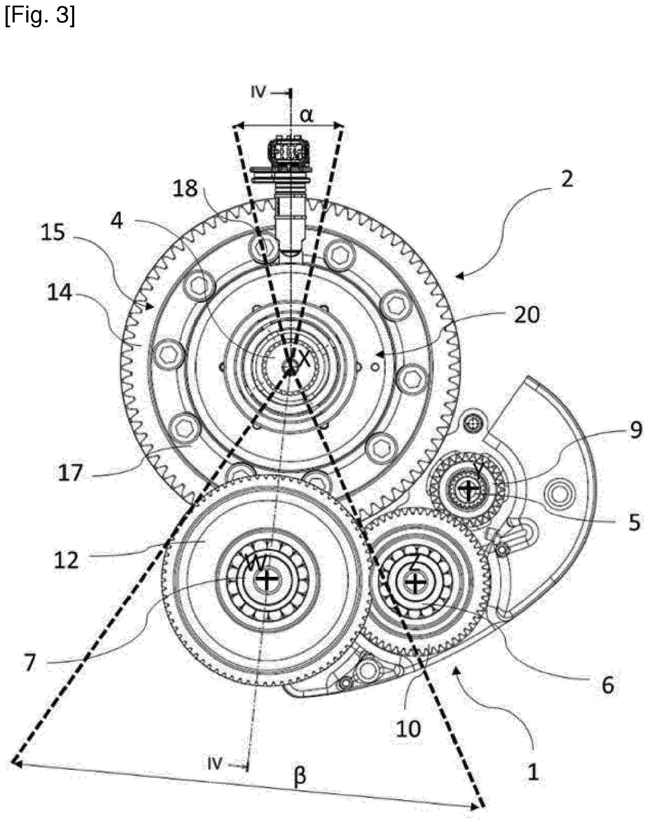

Dans le mode de réalisation représenté, le dispositif de réduction 1 comporte trois arbres, tous visibles sur les figures 2 et 3, à savoir un arbre d'entrée 5, un arbre intermédiaire 6 et un arbre de sortie 7. L'arbre d'entrée 5, l'arbre intermédiaire 6 et l'arbre de sortie 7 sont montés en rotation sur un carter de transmission 8, partiellement représenté sur la figure 1. L'arbre d'entrée 5, l'arbre intermédiaire 6 et l'arbre de sortie 7 sont mobiles en rotation selon des axes, désignés respectivement Y, Z, W, qui sont parallèles les uns aux autres. L'arbre d'entrée 5 est destiné à être accouplé en rotation au rotor du moteur, coaxialement à celui-ci. L'arbre d'entrée 5 comporte une roue dentée 9 tandis que l'arbre intermédiaire 6 et l'arbre de sortie 7 comporte chacun deux roues dentées 10, 11, 12, 13 de tailles différentes. La roue dentée 9 de l'arbre d'entrée 5 est en prise avec la roue dentée 10 la plus grande de l'arbre intermédiaire 6 tandis que la roue dentée 11 le plus petite de l'arbre intermédiaire 6 est en prise avec la roue dentée 12 le plus grande de l'arbre de sortie 7. Enfin, la roue dentée la plus petite 13 de l'arbre de sortie 7 est en prise avec une roue dentée d'entraînement 14 du dispositif d'entraînement différentiel 2. La roue dentée 12 la plus grande et la roue dentée 13 la plus petite de l'arbre de sortie 7 sont respectivement désignées « première roue dentée » et « deuxième roue dentée » par la suite. Le dispositif de réduction 1 produit ainsi, du moteur vers le dispositif d'entraînement différentiel 2, un rapport de transmission inférieur à 1, ce qui permet de délivrer aux arbres de roue 3, 4, un couple supérieur à celui délivré à la sortie du moteur. Dans le mode de réalisation détaillé ci-dessus, le dispositif de réduction 1 comporte trois étages de réduction. De préférence, afin de limiter l'encombrement axial du dispositif de réduction 1, les roues dentées 9, 10, formant le premier étage de réduction sont situées dans un même plan radial que les roues dentées 13, 14 formant le troisième étage de réduction. Dans d'autres modes de réalisation, le dispositif de réduction 1 peut ne comporter que deux étages de réduction ou bien encore comporter plus de trois étages de réduction.

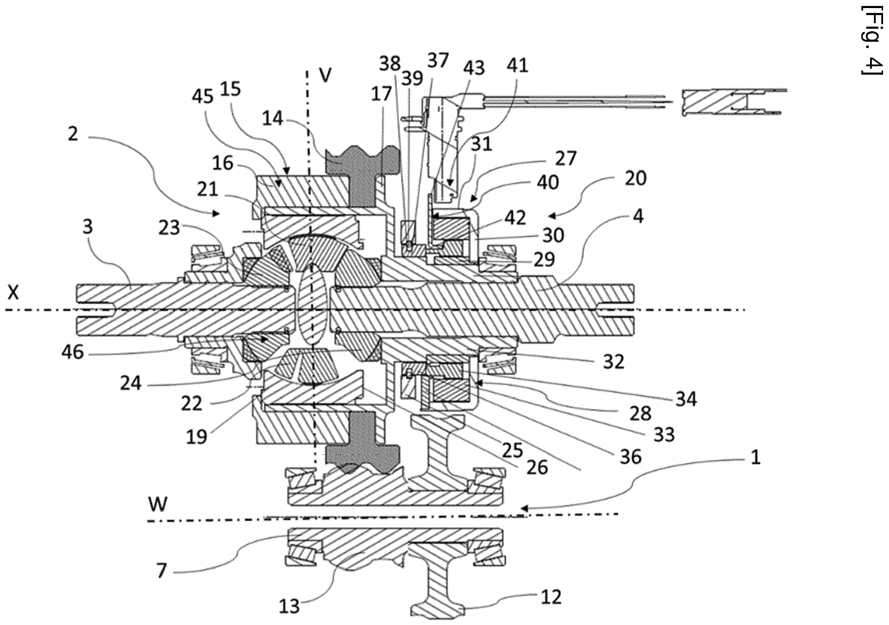

Comme illustré sur la figure 4, le dispositif d'entraînement différentiel 2 comporte :
- un premier élément 45, mobile en rotation autour de l'axe X, qui est accouplé cinématiquement à la deuxième roue dentée 13 de l'arbre de sortie 7 du dispositif de réduction 1 ;
- un deuxième élément 46, également mobile en rotation autour de l'axe X et destiné à entrainer les arbres de roue 3, 4 ; et
- un dispositif d'accouplement 20 apte à sélectivement accoupler ou désaccoupler le premier élément 45 et le deuxième élément 46.

Le premier élément 45 du dispositif d'entraînement différentiel 2 comporte un boîtier de différentiel 15, visible sur la figure 3, ainsi que la roue dentée d'entraînement 14 qui est fixée, solidaire en rotation, audit boîtier de différentiel 15. Le boîtier de différentiel 15 comporte deux parties 16, 17 qui sont fixées l'une à l'autre et à la roue dentée d'entraînement 14. Dans le mode de réalisation représenté, chacune des deux parties 16, 17 du boîtier de différentiel 15 comprend une bride. Les deux brides précitées prennent en sandwich une bride interne de la roue dentée d'entraînement 14. Des organes de fixation, tels que des vis 18 représentées sur les figures 1 à 3, passent au travers des brides de deux parties 16, 17 du boîtier de différentiel 15 et de la bride interne de la roue dentée d'entraînement 14 afin de les fixer les unes aux autres.

En relation avec la figure 4, on observe que le deuxième élément 46 du dispositif d'entraînement différentiel 2 comporte une couronne porteuse 19 de forme annulaire, qui est guidée en rotation, autour de l'axe X, à l'intérieur du boîtier de différentiel 15. Pour ce faire, le boitier de différentiel 15 comporte une portion cylindrique interne coopérant avec une surface externe cylindrique de la couronne porteuse 19. Le deuxième élément 46 comporte en outre deux engrenages satellites 21, 22 ainsi que deux engrenages planétaires 23, 24, également visibles sur la figure 4. Les engrenages satellites 21, 22 sont montés en rotation sur la couronne porteuse 19 autour d'un axe V, perpendiculaire à l'axe X. Les deux engrenages satellites 21, 22 comportent chacun une denture conique qui engrène avec une denture conique complémentaire des deux engrenages planétaires 23, 24. Les deux engrenages planétaires 23, 24 sont mobiles en rotation autour de l'axe X et sont chacun solidaires en rotation de l'un des deux axes de roue 3, 4. La couronne porteuse 19, les engrenages satellites 21, 22 et les engrenages planétaires 23, 24 forment ainsi un différentiel permettant aux deux arbres de roue 3, 4 de tourner à des vitesses différentes.

Le dispositif d'accouplement 20 est configuré pour sélectivement transmettre un couple entre le boîtier de différentiel 15 et la couronne porteuse 19. Ainsi, le système de transmission permet, lorsque le dispositif d'accouplement 20 est en position accouplée, de transmettre un couple entre le moteur et les arbres de roue 3, 4 en exerçant la fonction de différentiel autorisant des vitesses de rotation différentes des arbres de roue 3, 4. Lorsque le dispositif d'accouplement 20 est en position désaccouplée, la transmission entre le moteur et les arbres de roue 3, 4 est interrompue.

Dans un autre mode de réalisation non représenté, le dispositif d'accouplement est configuré pour accoupler le premier élément 45 avec l'un des deux engrenages planétaires 23, 24. Dans un tel mode de réalisation, la couronne porteuse 19 est solidaire en rotation du boîtier de différentiel 15 ou bien les deux engrenages satellites 21, 22, sont montés en rotation directement sur le boîtier de différentiel 15. Un tel dispositif d'accouplement vise alors à interdire que les deux arbres d'entrainement de roue 3, 4 tournent à des vitesses différentes (blocage de différentiel).

En revenant à la figure 4, on observe que le dispositif d'accouplement 20 comporte une première partie d'accouplement 25. L'homme du métier pourra se référer aussi au document US2002155913, notamment sa figure 2, pour les éléments évoqués ci-dessous qui ne sont pas visibles sur la figure 4. La première partie d'accouplement 25 est solidaire en rotation du boîtier de différentiel 15 tout en étant mobile axialement par rapport à celui-ci. La première partie d'accouplement 25 est mobile entre une position désaccouplée et une position accouplée. Dans la position accouplée, la première partie d'accouplement 25 est accouplée en rotation à une deuxième partie d'accouplement 26, solidaire en rotation de la couronne porteuse 19, ce qui permet la transmission du couple entre le boîtier de différentiel 15 et la couronne porteuse 19. Au contraire, dans la position désaccouplée, la première partie d'accouplement 25 est désaccouplée de la deuxième partie d'accouplement 26 de sorte que la transmission de couple est interrompue entre le boitier 8 et la couronne porteuse 19.

Le dispositif d'accouplement 20 est, par exemple, un dispositif à crabot. Ainsi, l'une de première et deuxième partie d'accouplements 25, 26 comporte des dents tandis que l'autre comporte des rainures correspondantes dans lesquelles sont engagées lesdites dents lorsque la première partie d'accouplement 25 est en position accouplée. Dans le mode de réalisation représenté, la deuxième partie d'accouplement 26 est formée d'un seul tenant avec la couronne porteuse 19. En d'autres termes, des dents ou des rainures sont ménagées dans la face latérale de la couronnée porteuse 19 qui est tournée en regard de la première partie d'accouplement 25. Toutefois, bien que l'invention soit décrite en liaison avec un dispositif d'accouplement à crabots, elle n'y est pas limitée et le dispositif d'accouplement pourra être d'un autre type et notamment être un dispositif d'accouplement par friction.

La première partie d'accouplement 25 comporte une portion intérieure, non visible sur la figure 4, qui est logée à l'intérieur du boîtier de différentiel 15, une portion extérieure qui est positionnée à l'extérieur du boîtier de différentiel 15 et des portions de liaison qui sont régulièrement réparties autour de l'axe X et qui passent chacune au travers d'une ouverture traversante correspondante, non visible, ménagée dans la partie 17 du boîtier de différentiel 15. Les portions de liaison précitées permettent ainsi de solidariser en rotation la première partie d'accouplement 25 au boîtier de différentiel 15 tout en permettant un déplacement axial relatif entre la première partie d'accouplement 25 et le boîtier de différentiel 15. Dans un mode de réalisation, la portion extérieure est annulaire tandis que la portion extérieure comporte des pattes s'étendant axialement dans le prolongement des portions de liaison. Toutefois, selon un autre mode de réalisation, la structure est inversée et la portion intérieure est annulaire tandis que la portion extérieure comporte une pluralité de pattes d'orientation axiale s'étendant dans le prolongement des portions de liaison.

Par ailleurs, le dispositif d'accouplement comporte un actionneur 27 permettant de déplacer axialement la première partie d'accouplement 25 entre la position accouplée et la position désaccouplée.

L'actionneur 27 comporte une carcasse 28 qui est montée fixe axialement et circonférentiellement autour de l'axe X, sur un carter du système de transmission. La carcasse 28 est de forme annulaire. La carcasse 28 présente une jupe interne 29, une paroi de fond 30 d'orientation radiale et une jupe externe 31 qui définissent un espace annulaire. La jupe interne 29 est ajustée autour d'un manchon latéral 32 de la partie 17 du boîtier de différentiel 15 tout en autorisant la rotation du manchon latéral 32 et par conséquent du boîtier de différentiel 15 par rapport à la carcasse 28 de l'actionneur 27, autour de l'axe X.

L'actionneur 27 est un actionneur électro-magnétique. Il comporte un électro-aimant 33 qui est logé dans la carcasse 28. L'électro-aimant 33 définit dans l'espace annulaire de la carcasse 28 un logement interne à l'intérieur duquel un piston 34 est guidé axialement en translation entre une position rétractée et une position déployée. L'actionneur 27 comporte, en outre, un capot 35, de préférence magnétique, qui ferme le logement interne. Le capot 35 comporte une surface de butée qui est apte à coopérer avec une surface de butée du piston 34 pour définir la position déployée du piston 34.

Le piston 34 comporte un corps, de forme annulaire, en matériau ferromagnétique, tel que du fer ou de l'acier par exemple. De manière avantageuse, comme détaillée ci-dessous, le piston 34 est bloqué en rotation par rapport à la carcasse 28 de l'actionneur 27.

Le piston 34 comporte également une bague de liaison 36, également de forme annulaire, par laquelle l'effort d'actionnement est transmis du corps du piston 34 à la première partie d'accouplement 25. Le corps du piston 34 et la bague de liaison 36 sont fixés l'un à l'autre par tout moyen, tel que collage, soudure laser, emmanchement en force, pions de fixation ou autres. La bague de liaison 36 est avantageusement réalisée dans un matériau amagnétique, tel que le cuivre par exemple, ce qui permet d'éviter des fuites indésirables de flux magnétiques vers les autres composant du dispositif d'accouplement 20.

La bague de liaison 36 est fixée à la première partie d'accouplement 25 par une liaison pivot. En d'autres termes, la bague de liaison 36 est fixée axialement à la première partie d'accouplement 25 tout en autorisant une rotation relative de la première partie d'accouplement 25 par rapport à la bague de liaison 36 autour de l'axe X. Le déplacement axial du piston 34 de la position rétractée vers la position déployée entraîne donc le déplacement de la première partie d'accouplement 25 de la position accouplée vers la position désaccouplée tandis que le retour du piston 34 vers la position rétractée entraîne le retour de la première partie d'accouplement 25 vers la position désaccouplée.

Dans le mode de réalisation représenté, la bague de liaison 36 comprend une gorge 37 qui est ménagée radialement en vis-à-vis d'une gorge 38 ménagée dans la première partie d'accouplement 25. Un anneau de retenue 39, disposé à l'intérieur des deux gorges 37, 38 précitées, permet ainsi d'assurer un blocage en translation axiale de la première partie d'accouplement 25 par rapport à la bague de liaison 36, tout en autorisant une rotation relative. L'anneau de retenue 39 peut être monté à l'intérieur des gorges 37, 38 par clipsage ou encliquetage.

Dans un mode de réalisation, alternatif, non représenté, la gorge 37 est formée directement sur le corps du piston 34 et l'actionneur 27 est alors dépourvu de bague de liaison 36.

L'actionneur 27 comporte également des organes de rappel, non représentés, qui sont aptes à rappeler élastiquement la première partie d'accouplement 25 vers la position désaccouplée. Les organes de rappel sont, par exemple, des ressorts hélicoïdaux qui sont, d'une part, axialement en appui contre le boîtier de différentiel 15 et, d'autre part, axialement en appui contre la première partie d'accouplement 25.

Lorsque l'électro-aimant 33 est mis sous tension avec une intensité supérieure à une intensité seuil, il permet de déplacer le piston 34 de la position rétractée vers la position déployée. Lorsque le piston 34 est en position déployée, le capot 35 magnétique exerce une attraction sur le corps du piston 34, ce qui permet de le maintenir en position déployée. L'intensité d'alimentation de l'électro-aimant 33 peut alors être diminuée tant qu'elle reste supérieure à ladite intensité seuil. Lorsque l'électro-aimant 33 est mis hors-tension ou qu'il est alimenté avec une intensité inférieure à l'intensité seuil, les organes de rappel, permettent de vaincre la force d'attraction entre le capot 35 et le corps du piston 34, ce qui permet de rappeler le piston 34 de la position déployée vers la position rétractée.

Comme illustré par exemple sur la figure 4, le dispositif d'accouplement 20 et la première roue dentée 12 de l'arbre de sortie 7 du dispositif de réduction 1 sont disposés du même côté du boîtier de différentiel 15. En outre, la première roue dentée 12 et le dispositif d'accouplement 20, en particulier l'actionneur 27, et notamment l'électro-aimant 33 sont positionnés radialement l'un au-dessus de l'autre. Ainsi, la projection radiale de la première roue dentée sur l'axe X et la projection radiale du dispositif d'accouplement (en particulier de l'actionneur 27, et notamment de l'électro-aimant 33) sur l'axe X se recouvrent au moins partiellement. En d'autres termes, un plan orthogonal aux axes X et Z passe à la fois par la première roue dentée 12 et par le dispositif d'accouplement 20 (en particulier par son actionneur 27, et notamment par son électro-aimant 33).

En outre, de manière avantageuse, la première roue dentée 12 est contenue dans l'encombrement axial du dispositif d'accouplement 20 (en particulier de son actionneur 27, en particulier de son électro-aimant 33). Ainsi, la première roue dentée 12 est positionnée axialement entre un premier plan radial, orthogonal à l'axe X, passant par la paroi de fond 30 de la carcasse 28 et la deuxième roue dentée 13.

Par ailleurs, le dispositif d'accouplement 20 est également équipé d'une cible 40 qui est fixée sur le piston 34 et qui est positionné axialement en regard d'un capteur 41. Le capteur 41 est configuré pour délivrer un signal représentatif de la distance entre la cible 40 et le capteur 41. Le signal délivré par le capteur 41 permet de déterminer l'état du dispositif d'accouplement, à savoir dans la position accouplée, dans la position désaccouplée ou dans une position intermédiaire. Le capteur 41 est un capteur sans contact et avantageusement magnétique, tel qu'un capteur à effet hall, par exemple. D'autres types de capteurs, notamment sans contact, peuvent être utilisés.

La cible 40 comporte une portion de détection 43 positionnée en regard du capteur 41 et une patte de fixation 42 qui traverse un évidement de la carcasse 28 et qui est fixée au piston 34.

Dans le mode de réalisation représenté, la cible 40 est formée d'un seul tenant dans une tôle magnétique. Dans un autre mode de réalisation, non représenté, la portion de détection 43 est formée par une pièce, telle qu'une tôle magnétique ou un aimant, qui est rapportée sur la patte de fixation 42. Dans ce cas, la patte de fixation 42 peut être réalisée dans un matériau amagnétique.

Dans le mode de réalisation représenté, la patte de fixation 42 traverse un évidement formé dans le capot 35 de la carcasse 28. Toutefois, de manière alternative, la patte de fixation 42 peut également traverser un évidement formé dans la jupe externe 31 de la carcasse 28. La patte de fixation 42 peut notamment être fixée au piston 34 par soudage, collage ou par emboîtement.

Le passage de la patte de fixation 42 de la cible 40 au travers d'un évidement de la carcasse 28 permet de former un organe anti-rotation empêchant ou limitant la rotation relative, autour de l'axe X, du piston 34 par rapport à la carcasse 28.

On notera que la première partie d'accouplement 25 étant axialement fixe par rapport au piston 34, le déplacement axial du piston 34 est égal au déplacement axial de la première partie d'accouplement 25 de sorte que la cible 40 peut à la fois être fixé au piston 34 et délivrer un signal représentatif de la position de la première partie d'accouplement 25. En outre, grâce à la fixation de la cible 40 au piston 34, fixe en rotation, la cible 40 n'est pas rotative par rapport au capteur 41. La cible 40 n'a donc pas besoin d'être circulaire. Ceci permet donc de limiter l'encombrement radial du dispositif d'accouplement 20 (notamment de l'actionneur 27) et facilite ainsi la disposition du dispositif d'accouplement 20 et de la première roue dentée 12 de l'arbre de sortie 7 radialement l'un au-dessus de l'autre.

On observe en outre que, considérés en projection selon l'axe X dans un plan orthogonal audit axe X, la cible 40 est inscrite à l'intérieur d'un secteur angulaire de centre X, désigné α sur la figure 3. Le secteur angulaire α est distinct du secteur angulaire β dans lequel est inscrite la première roue dentée 12. Ainsi, la cible 40 ne gêne pas le positionnement de la première roue dentée 12 de l'arbre de sortie 7 au plus proche de l'axe X, ce qui autorise le positionnement du dispositif d'accouplement 20 et de la première roue dentée 12 radialement l'un au-dessus de l'autre, même lorsque la taille de la première roue dentée 12 est importante en vue d'obtenir un faible rapport de transmission.

Dans le mode de réalisation représenté, la cible 40 et la première roue dentée 12 sont circonférentiellement opposées de part et d'autre de l'axe X. Autrement dit, il existe un plan comprenant l'axe X et passant à la fois par la cible 40 et la première roue dentée 12.

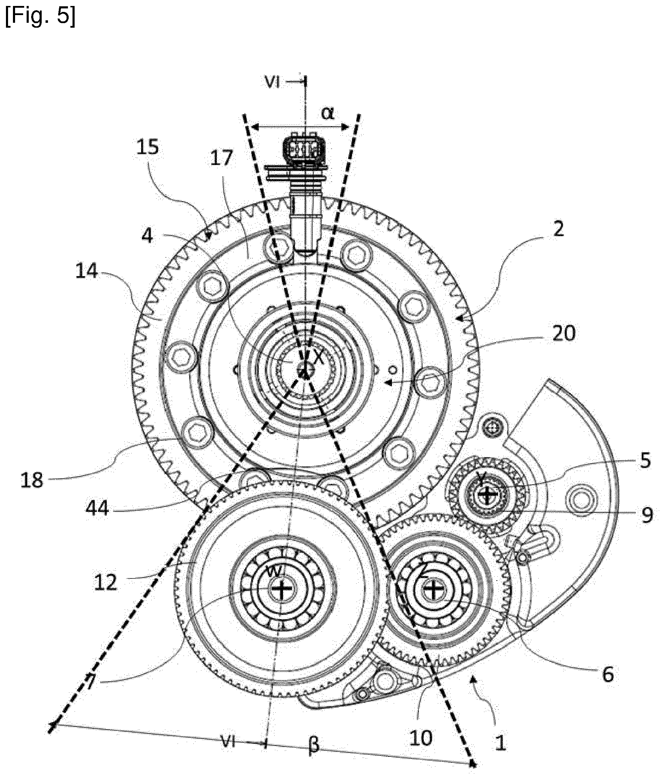

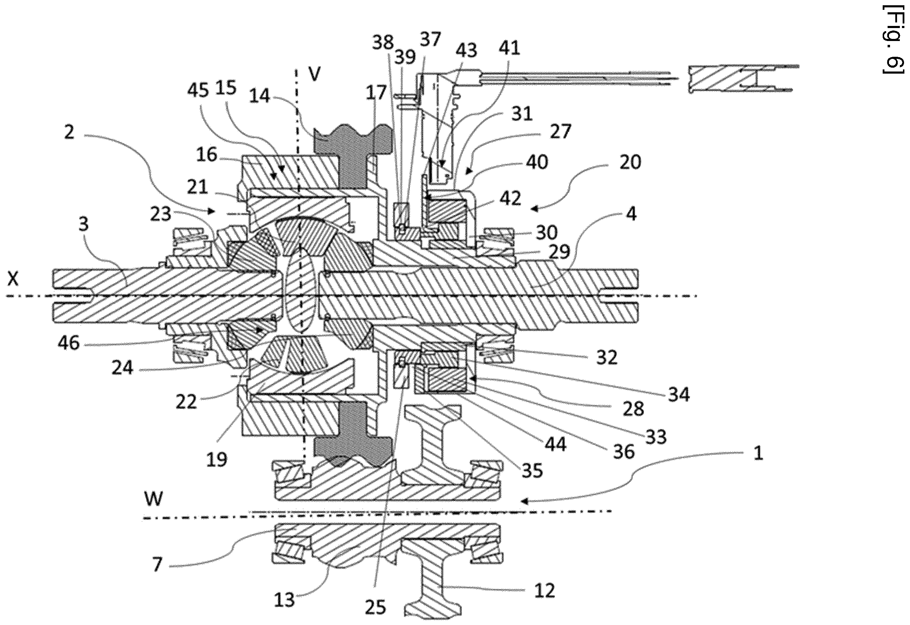

Les figures 5 et 6 illustrent un système de transmission selon un autre mode de réalisation. Ce système de transmission ne diffère de celui décrit ci-dessus en relation avec les figures 1 à 4 qu'en ce que la carcasse 28 de l'actionneur 27 présente localement, dans le secteur angulaire β dans lequel est placée la première roue dentée 12, un dégagement 44, borgne ou traversant. Le dégagement 44 permet de limiter, voire de supprimer, l'épaisseur de la jupe externe 31 de la carcasse 28, dans la zone de ladite jupe externe 31 située en regard de la première roue dentée 12. Ceci permet de positionner la périphérie de la première roue dentée 12 encore plus près de l'axe X, ce qui permet le positionnement d'une roue dentée 12 encore plus grande si le rapport de transmission doit être encore davantage limité.

Dans le mode de réalisation représenté, le dégagement 44 forme une cavité circulaire dont le rayon de courbure est sensiblement égal au rayon externe de la première roue dentée 12.

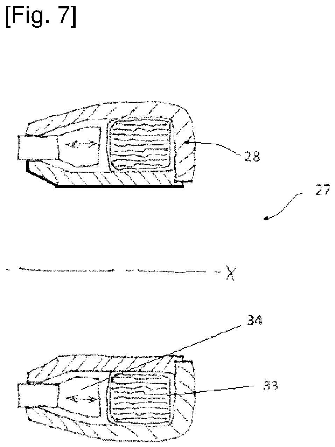

La figure 7 illustre schématiquement un actionneur 27, selon une variante de réalisation, et susceptible d'être utilisé alternativement à l'actionneur 27 décrit précédemment. Ce mode de réalisation diffère de l'actionneur 27 décrit précédemment en ce que le piston 34 n'est pas positionné radialement à l'intérieur ou à l'extérieur de l'électro-aimant 33 mais sur un même diamètre que celui-ci. Le piston 34 et l'électro-aimant 34 sont ainsi positionnés axialement côté à côte. Une telle variante de réalisation est avantageuse en ce qu'elle permet de réduire encore davantage l'encombrement radial de l'actionneur 27 et permet ainsi le positionnement d'une roue dentée 12 encore plus grande.

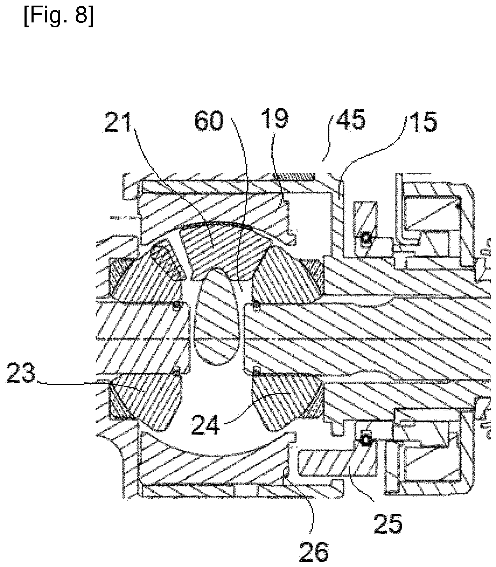

Sur la figure 8, on voit que le premier élément 45 comporte un boîtier de différentiel 15 à l'intérieur duquel est logé la deuxième partie d'accouplement 26. La première partie d'accouplement 25 comporte une portion intérieure qui est logée à l'intérieur du boîtier de différentiel 15, une portion extérieure qui est positionnée à l'extérieur du boîtier de différentiel 15 et une pluralités de portions de liaison qui relient axialement la portion intérieure et la portion extérieure de la première partie d'accouplement 25, chacune des portions de liaison passant au travers d'une ouverture traversante correspondante ménagée dans le boitier de différentiel 15.

La fonction différentielle 60, qui est assurée par les deux engrenages satellites (l'un est référencé 21 et l'autre n'est pas représenté) et les deux engrenages planétaires 23, 24, est agencée à l'intérieur de la couronne porteuse 19. On voit ainsi que la zone d'accouplement et de désaccouplement est agencée cinématiquement en amont de la fonction différentielle.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention, telle que définie dans les revendications.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Système de transmission pour un véhicule automobile comprenant :
- un dispositif de réduction (1) comprenant au moins un arbre de sortie (7) qui est mobile en rotation autour d'un axe W, l'arbre de sortie (7) comportant une première roue dentée (12) et une deuxième roue dentée (13) disposées côte à côte le long de l'axe W, la première roue dentée (12) étant destinée à être entraînée en rotation par un moteur ;
- un dispositif d'entraînement différentiel (2) qui est configuré pour distribuer le couple du dispositif de réduction (1) vers deux arbres de roue (3, 4) d'un essieu d'un véhicule, le dispositif d'entraînement différentiel (2) comprenant un premier élément (45) et un deuxième élément (46), chacun des premier et deuxième éléments (45, 46) étant mobile en rotation autour d'un axe X, parallèle à l'axe W, le premier élément (45) étant équipé d'une roue dentée d'entraînement (14) qui est en prise avec la deuxième roue dentée (13) de l'arbre de sortie (7) et le deuxième élément (46) étant destiné à entrainer au moins l'un des arbres de roue (3, 4) ; le dispositif d'entraînement différentiel (2) comprenant un dispositif d'accouplement (20) qui comporte une première partie d'accouplement (25) qui est solidaire en rotation du premier élément (45) et une deuxième partie d'accouplement (26) qui est solidaire en rotation du deuxième élément (46), la première partie d'accouplement (25) étant mobile axialement par rapport au premier élément (45) entre une position accouplée dans laquelle la première partie d'accouplement (25) est accouplée avec la deuxième partie d'accouplement (26) pour transmettre un couple entre le premier élément (45) et le deuxième élément (46) et une position désaccouplée dans laquelle la première partie d'accouplement (25) et la deuxième partie d'accouplement (26) sont désaccouplées l'une de l'autre, le dispositif d'accouplement (20) comportant en outre un actionneur (27) coopérant avec la première partie d'accouplement (25) afin de la déplacer entre la position accouplée et la position désaccouplée,
- un plan radial, orthogonal aux axes X et W, passant par la première roue dentée (12) et par le dispositif d'accouplement (20).

2. Système de transmission selon la revendication 1, dans lequel l'actionneur (27) comporte :
- une carcasse (28), disposée autour de l'axe X, la carcasse (28) étant fixée axialement et circonférentiellement sur un carter du système de transmission ; et
- un piston (34) guidé en translation axiale à l'intérieur de la carcasse (28) entre une position rétractée et une position déployée, ledit piston (34) étant agencé pour déplacer la première partie d'accouplement (25) de la position désaccouplée vers la position accouplée lors du mouvement du piston (34) de la position rétractée vers la position déployée.

3. Système de transmission selon la revendication 2, dans lequel la première roue dentée (12) est positionnée axialement entre la deuxième roue dentée (13) et un plan radial, orthogonal à l'axe X, et passant par une paroi de fond (30) de la carcasse (28).

4. Système de transmission selon la revendication 2 ou 3, dans lequel le piston (34) est fixe en rotation autour de l'axe X et fixé axialement à la première partie d'accouplement (25) par une liaison pivot autorisant une rotation relative autour de l'axe X de la première partie d'accouplement (25) par rapport au piston (34) ; et dans lequel le dispositif d'accouplement (20) comporte une cible (40) qui est fixée au piston (34) et qui est destinée à être positionnée en regard d'un capteur (41) apte à délivrer un signal représentatif de la distance entre la cible (40) et le capteur (41).

5. Système de transmission selon la revendication 4, dans lequel, considérés en projection dans un plan orthogonal audit axe X, la cible (40) est inscrite à l'intérieur d'un premier secteur angulaire (a) de centre X et la première roue dentée (12) est inscrite à l'intérieur d'un deuxième secteur angulaire (β) de centre X, la premier secteur angulaire (a) et le deuxième secteur angulaire (β) étant distincts l'un de l'autre.

6. Système de transmission selon la revendication 4 ou 5, présentant un plan dans lequel l'axe X est inclus et qui passe par la cible (40) et la première roue dentée (12).

7. Système de transmission selon l'une quelconque des revendications 2 à 6, dans lequel la carcasse (28) présente un dégagement ménagé dans une zone radialement en regard de la première roue dentée (12).

8. Système de transmission selon l'une quelconque des revendications 2 à 7, dans lequel le piston (34) comporte un corps en matériau ferromagnétique et dans lequel l'actionneur (27) comporte un électro-aimant (33) qui est logé dans la carcasse (28) et qui est apte à déplacer le piston (34) entre la position rétractée et la position déployée, et dans lequel le piston (34) et l'électro-aimant (33) sont disposés respectivement radialement l'un à l'intérieur de l'autre ou axialement l'un à côté de l'autre.

9. Système de transmission selon l'une quelconque des revendications 1 à 8, dans lequel le premier élément (45) comporte un boîtier de différentiel (15) à l'intérieur duquel est logé la deuxième partie d'accouplement (26), la première partie d'accouplement (25) comportant une portion intérieure qui est logée à l'intérieur du boîtier de différentiel (15), une portion extérieure qui est positionnée à l'extérieur du boîtier de différentiel (15) et une pluralités de portions de liaison qui relient axialement la portion intérieure et la portion extérieure de la première partie d'accouplement (25), chacune de portions de liaison passant au travers d'une ouverture traversante correspondante ménagée dans le boitier de différentiel (15).

10. Système de transmission selon la revendication 9, dans lequel le deuxième élément (46) comporte une couronne porteuse (19) qui est guidée en rotation autour de l'axe X à l'intérieur du boîtier de différentiel (15), deux engrenages satellites (21, 22) qui sont montés en rotation sur la couronne porteuse (19) autour d'un axe V perpendiculaire à l'axe X et deux engrenages planétaires (23, 24) qui sont mobiles en rotation autour de l'axe X, sont chacun en prises avec les deux engrenages satellites (21, 22)et sont chacun destinés à être solidaires en rotation d'un arbre de roue (3, 4).

11. Système de transmission selon la revendication 10, dans lequel la première roue dentée (12) et la deuxième roue dentée (13) de l'arbre de sortie (7) du dispositif de réduction se situent axialement, selon l'axe X, du même côté de l'axe V.

12. Système de transmission selon l'une quelconque des revendications précédentes, dans lequel la zone d'accouplement et de désaccouplement du dispositif d'accouplement est agencée cinématiquement en amont de la fonction différentielle du dispositif d'entrainement différentiel.

13. Système de transmission selon l'une quelconque des revendications précédentes, dans lequel le plan radial, orthogonal aux axes X et W, passant par la première roue dentée (12) et par le dispositif d'accouplement (20) passe par l'actionneur.

14. Groupe motopropulseur comprenant une machine électrique et un système de transmission selon l'une des revendications précédentes, la machine électrique étant accouplée à un organe d'entrée du dispositif de réduction.
